# EUROPEAN PATENT APPLICATION

(11) **EP 3 690 006 A1**
(43) Date of publication of application: **05.08.2020**
(21) Application number: 18862824.2
(22) Date of filing: 21.09.2018
(51) Int. Cl.: C09K 21/12, C08K 5/523, C08L 25/04, C08L 69/00, C08L 71/12, C08L 101/00

(54) **FLAME RETARDANT COMPOSITION, FLAME RETARDANT RESIN COMPOSITION CONTAINING SAID FLAME RETARDANT COMPOSITION, AND MOLDED BODY OF SAID FLAME RETARDANT RESIN COMPOSITION**

(30) Priority: 28.09.2017 JP 2017188992
(71) Applicant: Adeka Corporation, Tokyo 116-8554 (JP)
(72) Inventor: SATO, Fumihiko, Tokyo 116-8554 (JP); SAKURAI, Hisashi, Tokyo 116-8554 (JP); KOKURA, Genta, Tokyo 116-8554 (JP); TANJI, Naoko, Tokyo 116-8554 (JP)
(74) Representative: Forstmeyer, Dietmar
(86) International application number: PCT/JP2018/035117
(87) International publication number: WO 2019/065518

(57) **Abstract**

A flame retardant composition contains at least one phosphoric acid ester represented by the formula (1) below, wherein the phosphoric acid ester contains phosphoric acid esters having n = 1, 2, 3, 4, and 5 in a total amount of 99 to 100 mass% inclusive, and a phosphoric acid ester represented by the formula (1) below having n = 1 is contained in an amount of 60 mass% or greater and less than 70 mass% with respect to the total amount of the phosphoric acid ester. (In the formula (1), R¹ and R² each independently indicate a hydrogen atom or a methyl group, and n indicates a number that is 1, 2, 3, 4, 5, 6, or 7.)

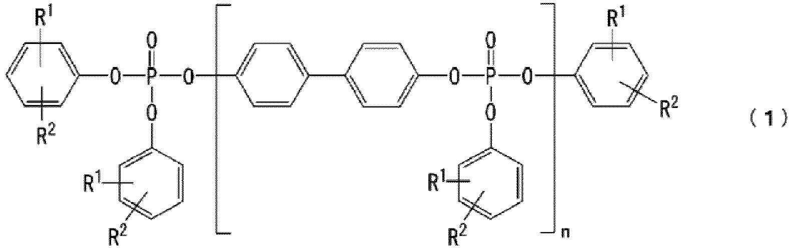

## Description

### Technical Field

The present invention relates to a flame retardant composition, a flame-retardant resin composition containing the flame retardant composition, and a molded body of the flame-retardant resin composition. More particularly, the present invention relates to a flame retardant composition with excellent fluidity, storage stability, and handling properties, a flame-retardant resin composition containing the flame retardant composition, and a molded body of the flame-retardant resin composition.

### Background Art

Synthetic resins are generally lightweight, excellent in terms of water resistance, chemical resistance, electrical insulation properties, various mechanical properties, and the like, and synthetic resins are also easy to mold, and are therefore widely used as building materials, materials for electric, electronic, and home appliances, automotive materials, fiber materials, and the like. On the other hand, synthetic resins are generally flammable. Thus, in order to impart flame retardancy to synthetic resins, methods are employed in which flame retardants, such as organic halogen compounds, inorganic hydrates, or phosphorous compounds, are added during the preparation of resin molded products.

Of the above-described flame retardants, organic halogen compounds are used most widely because of their excellent flame retardation effect on a variety of synthetic resins. However, halogen-containing compounds thermally decompose during resin molding to generate a hydrogen halide, which contaminates the working environment, corrodes molds, or causes coloration or gelation of the resin. Moreover, upon combustion due to fire for example, halogen-containing compounds emit a large amount of smoke together with the corrosive hydrogen halide gas that is harmful to human body.

Inorganic hydrates, such as aluminum hydroxide and magnesium hydroxide, are halogen-free flame retardants. These inorganic hydrates have a small flame retardation effect and need to be added in large quantities in order to achieve sufficient flame retardation, and therefore have a disadvantage of impairing the intrinsic properties of the resins.

In contrast, organic phosphoric acid ester compounds, in particular, among phosphorous compounds are used for various purposes as flame retardants that are free of halogen and yet can provide a good flame retardation effect. Typical organic phosphoric acid esters include triaryl phosphoric acid esters, such as triphenyl phosphate (TPP), tricresyl phosphate (TCP), and trixylyl phosphate (TXP).

Among these phosphoric acid esters, Patent Literature 1 proposes, as a solid flame retardant that is less likely to exhibit deterioration in the flame retardancy and the resin properties, a solid flame retardant having a biphenyl skeleton in its structure.

However, with solid flame retardants, there are problems regarding the processability and the handling properties, such as scattering of powder during the addition and filling to the resin, as well as problems of deterioration of the working environment, and so on.

In contrast to such solid flame retardants, liquid flame retardants are used that are free of the risk of powder scattering, and Patent Literature 2 proposes a resin composition that uses a flame retardant in which a phosphoric acid ester is contained with a limited ratio.

### Citation List

### Patent Literature

Patent Literature 1: JP 2008-202009A
Patent Literature 2: US 2016068663A1

### Summary of Invention

However, such conventional liquid flame retardants have drawbacks regarding their storage stability, and there are problems in that, during a long-term storage, turbidness, crystal deposition, solidification, or the like occurs. The occurrence of crystal deposition or solidification results in poor processability and handling properties, and it is therefore desirable to solve such problems.

Therefore, an object of the present invention is to provide a flame retardant composition that has excellent storage stability, excellent processability, and excellent handling properties. Moreover, an object of the present invention is to provide a flame-retardant resin composition that has excellent processability and excellent handling properties. Furthermore, an object of the present invention is to provide a molded body that is obtained from the flame-retardant resin composition with excellent processability and excellent handling properties and has excellent flame retardancy.

In order to achieve the above-described objects, the inventors of the present invention conducted in-depth research and finally completed the present invention.

That is to say, the present invention provides a flame retardant composition containing at least one phosphoric acid ester represented by the formula (1) below,
wherein the phosphoric acid ester contains phosphoric acid esters having n = 1, 2, 3, 4, and 5 in a total amount of 99 to 100 mass% inclusive, and
a phosphoric acid ester represented by the formula (1) below having n = 1 is contained in an amount of 60 mass% or greater and less than 70 mass% with respect to a total amount of the phosphoric acid ester.

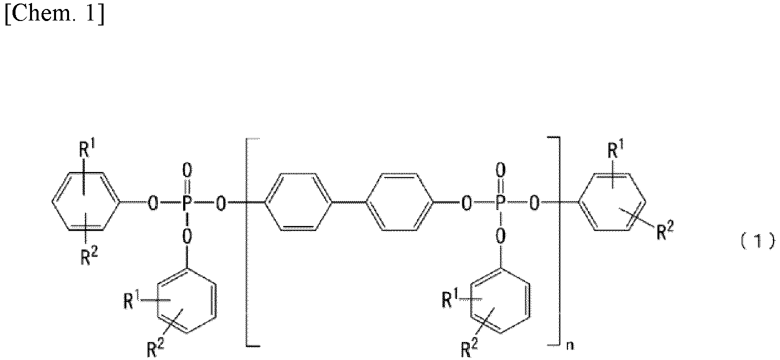

(In the formula (1), R¹ and R² each independently indicate a hydrogen atom or a methyl group, and n indicates a number that is 1, 2, 3, 4, 5, 6, or 7).

Moreover, the present invention provides the flame retardant composition, wherein R¹ and R² in the formula (1) are hydrogen atoms.

Moreover, the present invention provides the flame retardant composition, wherein the flame retardant composition is in liquid form at 25°C.

Moreover, the present invention provides the flame retardant composition, wherein the flame retardant composition has a viscosity of 17,500 to 40,000 mPa•s at 25°C.

Moreover, the present invention provides a flame-retardant resin composition containing a synthetic resin and the flame retardant composition.

Moreover, the present invention provides the flame-retardant resin composition, wherein the synthetic resin is at least one selected from the group consisting of a polycarbonate resin and a copolymer thereof.

Moreover, the present invention provides the flame-retardant resin composition, wherein the synthetic resin is at least one selected from the group consisting of a polyphenylene ether resin, a polystyrene resin, and a copolymer thereof.

Furthermore, the present invention provides a molded body which is obtained from the flame-retardant resin composition.

### Description of Embodiments

Hereinafter, embodiments of the present invention will be described in detail.

First, a flame retardant composition of the present invention will be described.

The flame retardant composition of the present invention contains a phosphoric acid ester represented by a formula (1) below. This phosphoric acid ester is a mixture of compounds having n in the formula (1) below being 1, 2, 3, 4, 5, 6, or 7 (hereinafter also referred to as a mixture of phosphoric acid esters). This mixture of phosphoric acid esters includes at least a compound having n being 1. In the mixture of phosphoric acid esters, the total amount of compounds having n = 1, 2, 3, 4, and 5 is from 99 to 100 mass%, and is preferably 100 mass% in terms of storage stability and handling properties. Moreover, the mixture does not necessarily need to contain all of the phosphoric acid esters having n = 2, 3, 4, and 5. In the case where the mixture contains phosphoric acid esters represented by the formula (1) below having n = 1, 2, 3, 4, and 5 in a total amount of 99 mass% or greater and less than 100 mass%, the phosphoric acid ester represented by the formula (1) below contains a phosphoric acid ester having n = 6 in the formula (1) below and/or a phosphoric acid ester having n = 7 in the formula (1) below. The amount of phosphoric acid esters having n = 1, 2, 3, 4, 5, 6, or 7 in the mixture of phosphoric acid esters can be determined using liquid chromatography. 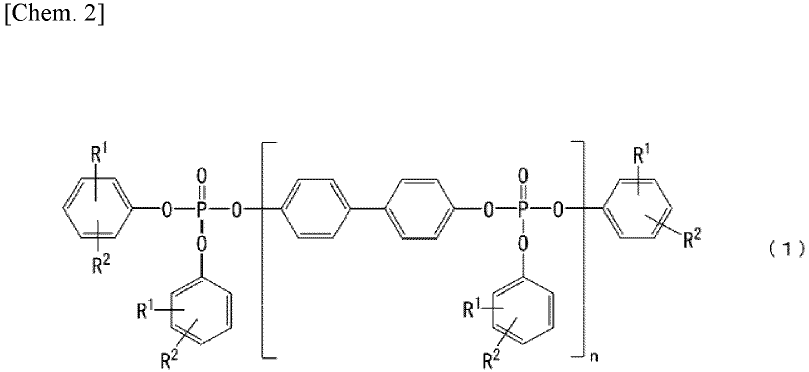 (wherein, R¹ and R² each independently indicate a hydrogen atom or a methyl group, and n indicates a number that is 1, 2, 3, 4, 5, 6, or 7.)

In the flame retardant composition of the present invention, in terms of the storage stability and the handling properties, it is preferable that R¹ and R² in the formula (1) above are hydrogen atoms.

The amount of a phosphoric acid ester represented by the formula (1) having n = 1 contained in the flame retardant composition of the present invention is 60 mass% or greater and less than 70 mass% with respect to the total amount of the flame retardant composition.

If the amount of the phosphoric acid ester having n = 1 is not less than 70 mass%, the storage stability deteriorates such that turbidness, solidification, crystal deposition, or the like occurs during the storage. On the other hand, if the amount of the phosphoric acid ester having n = 1 is less than 60 mass%, the viscosity is high, resulting in poor fluidity and poor handling properties.

The amount of the phosphoric acid ester having n = 1 contained in the flame retardant composition of the present invention is more preferably from 61.0 to 69.0 mass%, and most preferably from 62.0 to 68.0 mass%, in terms of the storage stability and the handling properties.

Preferably, the flame retardant composition of the present invention is composed only of the above-described mixture of phosphoric acid esters. The amount of the mixture of phosphoric acid esters of the present invention that is contained can be determined using liquid chromatography, for example.

Preferably, the flame retardant composition of the present invention is in liquid form at room temperature (25°C) in terms of handling properties. Being in liquid form means having such a viscosity that the capability of the flame retardant composition to flow can be visually confirmed with ease. Moreover, it is preferable that no turbidness and no crystal or solid deposition occur.

In terms of the storage stability and the handling properties, the flame retardant composition of the present invention has a viscosity of preferably 17,500 to 40,000 mPa•s, more preferably 18,500 to 37,000 mPa•s, even more preferably 19,500 to 32,000 mPa•s, and most preferably 19,500 to 28,000 mPa•s, at 25°C.

The viscosity as used in the present invention is determined using a B type viscometer in conformity with the JIS K 7117-1 standard.

Specific examples of the phosphoric acid ester represented by the formula (1) above include phosphoric acid esters Nos. land 2 below, for example. In terms of the storage stability and the handling properties, it is preferable that the flame retardant composition of the present invention contains the phosphoric acid ester No. 1. Note that with respect to the phosphoric acid esters Nos. 1 and 2, n is a number that is 1, 2, 3, 4, 5, 6, or 7.

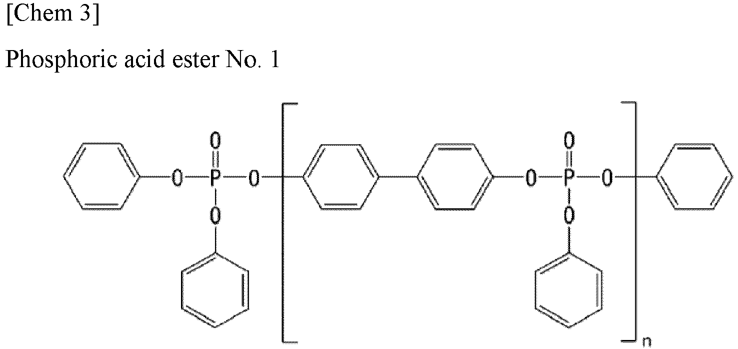

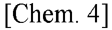

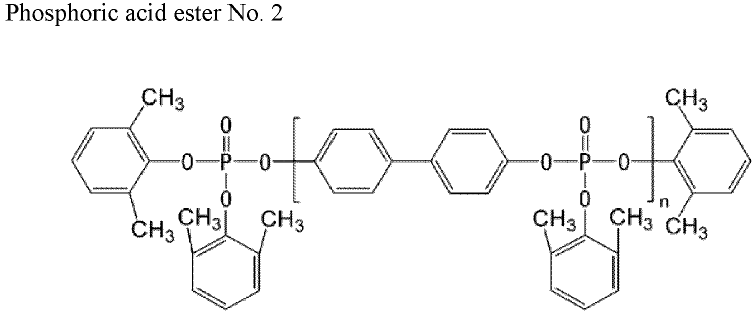

In addition to the mixture of phosphoric acid esters, the flame retardant composition of the present invention may also contain other components within the scope that does not impair the effects of the present invention. Components that will be described later as examples of components that can be added to a flame-retardant resin composition of the present invention can be used as the other components.

The method for producing a composition of phosphoric acid esters represented by the formula (1) above is not particularly limited, and in the case where R¹ and R² are hydrogen atoms for example, the production can be achieved by reacting 4,4'-dihydroxybiphenyl, phenol, and phosphorus oxychloride in the presence of a catalyst, such as magnesium chloride, and then performing dehydrochlorination. The ratio of the phosphoric acid ester compound having n = 1 contained can be adjusted to 60 mass% or greater and less than 70 mass% by adjusting the amount of phosphorus oxychloride that is used with respect to 4,4'-dihydroxybiphenyl. A preferred amount of phosphorus oxychloride that is used is preferably 2.02 to 2.26 mol, more preferably 2.04 to 2.24 mol, and even more preferably 2.06 to 2.19 mol, with respect to 1.00 mol of 4,4'-dihydroxybiphenyl.

The flame retardant composition of the present invention can impart flame retardancy to a synthetic resin by being added to the synthetic resin.

The method for adding the flame retardant composition of the present invention is not particularly limited. Since the flame retardant composition of the present invention is preferably in liquid form at room temperature (25°C) and has such a viscosity that provides excellent fluidity and hence ease of handling, the flame retardant composition can be easily added and adjusted, making it possible to easily obtain a flame-retardant resin composition. Naturally, the flame retardant composition with increased fluidity can also be used by warming the flame retardant composition during the addition or adjustment of the flame retardant composition.

Moreover, since the flame retardant composition of the present invention does not cause turbidness, crystal or solid deposition, solidification, and the like even when stored for a long period of time, the flame retardant composition does not require homogenization operations, such as stirring and warming, and can therefore be used with ease.

Next, a flame-retardant resin composition of the present invention will be described.

The flame-retardant resin composition of the present invention contains a synthetic resin and the flame retardant composition of the present invention.

In terms of the flame retardancy and the mechanical properties, the flame-retardant resin composition of the present invention contains the flame retardant composition in an amount of preferably 0.5 to 30 parts by mass, more preferably 1 to 25 parts by mass, and even more preferably 2 to 20 parts by mass, with respect to 100 parts by mass of the synthetic resin. If the amount of the flame retardant composition is less than 0.5 parts by mass, sufficient flame retardancy may not be obtained. If the amount of the flame retardant composition is greater than 30 parts by mass, the intrinsic mechanical properties of the resin may be impaired.

Next, the synthetic resin used in the present invention will be described.

A specific example of the synthetic resin used in the present invention include a thermoplastic resin, examples of which include polyolefin-based resins, such as α-olefin polymers such as polypropylene, high-density polyethylene, low-density polyethylene, linear low-density polyethylene, cross-linked polyethylene, ultra-high-molecular-weight polyethylene, polybutene-1, poly-3-methylpentene, and poly-4-methylpentene, and an ethylene-vinyl acetate copolymer, an ethylene-ethyl acrylate copolymer, and an ethylene-propylene copolymer, as well as copolymers of these polyolefin-based resins; halogen-containing resins, such as polyvinyl chloride, polyvinylidene chloride, chlorinated polyethylene, chlorinated polypropylene, polyvinylidene fluoride, chlorinated rubber, vinyl chloride-vinyl acetate copolymers, vinyl chloride-ethylene copolymers, vinyl chloride-vinylidene chloride copolymers, vinyl chloride-vinylidene chloride-vinyl acetate terpolymers, vinyl chloride-acrylic acid ester copolymers, vinyl chloride-maleic acid ester copolymers, and vinyl chloride-cyclohexylmaleimide copolymers; copolymers (e.g., AS resin, ABS resin, ACS resin, SBS resin, MBS resin, heat-resistant ABS resin, and the like) of petroleum resin, coumarone resin, polystyrene, high impact polystyrene (HIPS), polyvinyl acetate, acrylic resin, styrene and/or α-methylstyrene with other monomers (e.g., maleic anhydride, phenylmaleimide, methyl methacrylate, butadiene, acrylonitrile, and the like); polymethyl methacrylate, polyvinyl alcohol, polyvinyl formal, and polyvinyl butyral; aromatic polyester resins, such as polyalkylene terephthalates such as polyethylene terephthalate, polybutylene terephthalate, and polycyclohexane dimethylene terephthalate, and polyalkylene naphthalates such as polyethylene naphthalate and polybutylene naphthalate, as well as linear polyester resins, such as polytetramethylene terephthalate; degradable aliphatic polyesters, such as polyhydroxybutyrate, polycaprolactone, polybutylene succinate, polyethylene succinate, polylactic acid, polymalic acid, polyglycolic acid, polydioxane, and poly(2-oxetanone); polyamide resins, such as polyphenylene oxide, polycaprolactam, and polyhexamethylene adipamide; cellulose ester-based resins, such as cellulose acetate, cellulose propionate, cellulose butyrate, cellulose acetate propionate, and cellulose acetate butyrate; and thermoplastic resins, such as polycarbonate, polycarbonate/ABS resin, branched polycarbonate, polyacetal, polyphenylene sulfide, polyurethane, cellulose-based resin, polyimide resin, polyethersulfone (PES), polysulfone, polyphenylene ether, polyetherketone, polyetheretherketone, and liquid crystal polymer, as well as blends of these thermoplastic resins.

Moreover, the synthetic resin of the present invention may also be an elastomer, such as isoprene rubber, butadiene rubber, an acrylonitrile-butadiene copolymer rubber, styrene-butadiene copolymer rubber, fluorocarbon rubber, silicone rubber, a polyolefin-based thermoplastic elastomer, a styrene-based thermoplastic elastomer, a polyester-based thermoplastic elastomer, a nitrile-based thermoplastic elastomer, a nylon-based thermoplastic elastomer, a vinyl chloride-based thermoplastic elastomer, a polyamide-based thermoplastic elastomer, or a polyurethane-based thermoplastic elastomer.

Further examples of the synthetic resin that can be used in the present invention include thermosetting resins, such as a phenolic resin, an urea resin, a melamine resin, an epoxy resin, and an unsaturated polyester resin; fluorine-based resins; and silicone resins.

These synthetic resins for use in the present invention may be used alone or in a combination of two or more. Also, these synthetic resins may be alloyed.

Moreover, these synthetic resins can be used regardless of molecular weight, the degree of polymerization, density, softening point, the proportion of insoluble substances in solvents, the degree of stereoregularity, the presence or absence of catalyst residue, the type and blending ratio of starting monomer, the type of polymerization catalyst (e.g., a Ziegler catalyst, a metallocene catalyst, etc.), and the like.

Among these synthetic resins, in terms of the flame retardancy, processability, and handling properties, at least one synthetic resin selected from the group consisting of polycarbonate, polystyrene, an ABS resin, high impact polystyrene, a polyester resin, a polyamide resin, polyphenylene ether, and a cellulose ester-based resin, as well as copolymers thereof is preferable, and at least one synthetic resin selected from the group consisting of polycarbonate, polyphenylene ether, and a styrene-based resin is more preferable. These resins may be used alone or in a combination of two or more. Also, these resins may be alloyed. In particular, at least one synthetic resin selected from the group consisting of a polycarbonate resin and copolymers thereof, or a polymer alloy of a polyphenylene ether resin and polystyrene resin is preferable.

Here, specific examples of the styrene-based resin include resins, such as polystyrene, a styrene-butadiene-styrene copolymer (SBS resin), a hydrogenated styrene-butadiene-styrene copolymer (hydrogenated SBS), a hydrogenated styrene-isoprene-styrene copolymer (SEPS), high impact polystyrene (HIPS), an acrylonitrile-styrene copolymer (AS resin), an acrylonitrile-butadiene-styrene copolymer (ABS resin), a methyl methacrylate-butadiene-styrene copolymer (MBS resin), a methyl methacrylate-acrylonitrile-butadiene-styrene copolymer (MABS resin), an acrylonitrile-acrylic rubber-styrene copolymer (AAS resin), an acrylonitrile-ethylene-propylene rubber-styrene copolymer (AES resin), and a styrene-IPN-type rubber copolymer, as well as mixtures of these resins. Furthermore, styrene-based resins that have stereoregularity like syndiotactic polystyrene or the like may also be employed. Among these styrene-based resins, polystyrene (PS) and high impact polystyrene (HIPS) are preferable.

Next, components that can be added to the flame-retardant resin composition of the present invention will be described.

It is preferable that the flame-retardant resin composition of the present invention contains an anti-dripping agent in order to prevent dripping during combustion, within the scope that does not impair the effects of the present invention.

Examples of the anti-dripping agent include fluorine-based anti-dripping agents, silicone rubbers, phyllosilicate, and the like. Among these, fluorine-based anti-dripping agents are preferable.

Specific examples of the fluorine-based anti-dripping agents include fluorine-based resins such as polytetrafluoroethylene, polyvinylidene fluoride, and polyhexafluoropropylene; perfluoroalkane sulfonic acid alkali metal salt compounds such as a perfluoromethane sulfonic acid sodium salt, a perfluoro-n-butane sulfonic acid potassium salt, a perfluoro-t-butane sulfonic acid potassium salt, a perfluorooctane sulfonic acid sodium salt, and a perfluoro-2-ethylhexane sulfonic acid calcium salt; a perfluoroalkane sulfonic acid alkaline earth metal salt; and the like.

Among other fluorine-based anti-dripping agents, polytetrafluoroethylene is most preferable in terms of the anti-dripping properties.

Examples of the phyllosilicate include smectite-based clay minerals such as montmorillonite, saponite, hectorite, beidellite, stevensite, and nontronite; vermiculite; halloysite; swelling mica; talc; and the like, and organic cations, quaternary ammonium cations, or phosphonium cations may also be intercalated between the phyllosilicate sheets.

The anti-dripping agent is contained in an amount of preferably 0.005 to 3 parts by mass, more preferably 0.01 to 2 parts by mass, even more preferably 0.05 to 1.0 parts by mass, and most preferably 0.1 to 0.5 parts by mass, with respect to 100 parts by mass of the synthetic resin. If the amount of the anti-dripping agent is less than 0.005 parts by mass, a sufficient anti-dripping effect may not be obtained, and if the amount of the anti-dripping agent is greater than 3 parts by mass, the properties of the resin may be degraded.

The flame-retardant resin composition of the present invention may further contain, where necessary, one or more halogen-free organic or inorganic flame retardants and flame-retardant aids within the scope that does not impair the effects of the present invention. Examples of the flame retardants and flame-retardant aids include a triazine ring-containing compound, a metal hydroxide, a phosphoric acid ester-based flame retardant, a condensed phosphoric acid ester-based flame retardant, a phosphate-based flame retardant, an inorganic phosphorus-based flame retardant, a (poly)phosphoric acid salt-based flame retardant, a dialkyl phosphinic acid salt, a silicone-based flame retardant, a metal oxide, a boric acid compound, an expandable graphite, other inorganic flame-retardant aids, other organic flame-retardant aids, and the like.

Examples of the triazine ring-containing compound include melamine, ammeline, benzoguanamine, acetoguanamine, phthalodiguanamine, melamine cyanurate, butylene diguanamine, norbornene diguanamine, methylene diguanamine, ethylene dimelamine, trimethylene dimelamine, tetramethylene dimelamine, hexamethylene dimelamine, 1,3-hexylene dimelamine, and the like.

Examples of the metal hydroxide include magnesium hydroxide, aluminum hydroxide, calcium hydroxide, barium hydroxide, zinc hydroxide, KISUMA 5A (trademark of magnesium hydroxide manufactured by Kyowa Chemical Industry Co., Ltd.), and the like.

Examples of the phosphoric acid ester-based flame retardant include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyldiphenyl phosphate, trixylenyl phosphate, octyldiphenyl phosphate, xylenyldiphenyl phosphate, trisisopropylphenyl phosphate, 2-ethylhexyldiphenyl phosphate, t-butylphenyldiphenyl phosphate, bis-(t-butylphenyl)phenyl phosphate, tris-(t-butylphenyl)phosphate, isopropylphenyldiphenyl phosphate, bis-(isopropylphenyl)diphenyl phosphate, tris-(isopropylphenyl)phosphate, and the like.

Examples of the condensed phosphoric acid ester-based flame retardant include 1,3-phenylene bis(diphenylphosphate),1,3-phenylene bis(dixylenylphosphate), bisphenol A bis(diphenylphosphate), and the like.

Examples of the inorganic phosphorus-based flame retardant include red phosphorus.

Examples of the (poly)phosphoric acid salt-based flame retardant include ammonium salts and amine salts of (poly)phosphoric acid, such as ammonium polyphosphate, melamine polyphosphate, piperazine polyphosphate, melamine pyrophosphate, and piperazine pyrophosphate.

Examples of the dialkyl phosphinic acid salt include aluminum diethylphosphinate, zinc diethylphosphinate, and the like.

Examples of the other inorganic flame-retardant aids include inorganic compounds such as zinc oxide, titanium oxide, aluminum oxide, magnesium oxide, and hydrotalcite, and surface-treated products of the above compounds, hydrotalcite, and the like.

As specific examples thereof, various types of commercially available products can be used, such as TIPAQUE R-680 (trademark of titanium oxide manufactured by Ishihara Sangyo Kaisha, Ltd.), Kyowamag 150 (trademark of magnesium oxide manufactured by Kyowa Chemical Industry Co., Ltd.), DHT-4A (hydrotalcite manufactured by Kyowa Chemical Industry Co., Ltd.), and Alcamizer 4 (zinc-modified hydrotalcite manufactured by Kyowa Chemical Industry Co., Ltd.,).

Examples of the other organic flame-retardant aids include pentaerythritol, dipentaerythritol, and polypentaerythritol.

The flame-retardant resin composition of the present invention may further contain, where necessary, a phenol-based antioxidant, a phosphorus-based antioxidant, a thioether-based antioxidant, an ultraviolet absorber, a hindered amine-based light stabilizer, an antioxidant, and the like. It is preferable to stabilize the synthetic resin by adding these components to the synthetic resin.

Examples of the phenol-based antioxidant include 2,6-di-t-butyl-p-cresol, 2,6-diphenyl-4-octadecyloxyphenol, distearyl(3,5-di-t-butyl-4-hydroxybenzyl)phosphonate, 1,6-hexamethylenebis[(3,5-di-t-butyl-4-hydroxyphenyl)propionamide], 4,4'-thiobis(6-t-butyl-m-cresol), 2,2'-methylenebis(4-methyl-6-t-butylphenol), 2,2'-methylenebis(4-ethyl-6-t-butylphenol), 4,4'-butylidenebis(6-t-butyl-m-cresol), 2,2'-ethylidenebis(4,6-di-t-butylphenol), 2,2'-ethylidenebis(4-s-butyl-6-t-butylphenol), 1,1,3-tris(2-methyl-4-hydroxy-5-t-butylphenyl)butane, 1,3,5-tris(2,6-dimethyl-3-hydroxy-4-t-butylbenzyl)isocyanurate, 1,3,5-tris(3,5-di-t-butyl-4-hydroxybenzyl)isocyanurate, 1,3,5-tris(3,5-di-t-butyl-4-hydroxybenzyl)-2,4,6-trimethylbenzene, 2-t-butyl-4-methyl-6-(2-acryloyloxy-3-t-butyl-5-methylbenzyl)phenol, stearyl(3,5-di-t-butyl-4-hydroxyphenyl)propionate, tetrakis[3-(3,5-di-t-butyl-4-hydroxyphenyl)methyl propionate]methane, thiodiethyleneglycolbis[(3,5-di-t-butyl-4-hydroxyphenyl)propionate], 1,6-hexamethylenebis[(3,5-di-t-butyl-4-hydroxyphenyl)propionate], bis[3,3-bis(4-hydroxy-3-t-butylphenyl)butanoate]glycol ester, bis[2-t-butyl-4-methyl-6-(2-hydroxy-3-t-butyl-5-methylbenzyl)phenyl]terephthalate, 1,3,5-tris[(3,5-di-t-butyl-4-hydroxyphenyl)propionyloxyethyl]isocyanurate, 3,9-bis[1,1-dimethyl-2-{(3-t-butyl-4-hydroxy-5-methylphenyl)propionyloxy}ethyl]-2,4,8,10-t etraoxaspiro[5,5]undecane, triethylene glycol bis[(3-t-butyl-4-hydroxy-5-methylphenyl)propionate], and the like.

These phenol-based antioxidants are used in an amount of preferably 0.001 to 10 parts by mass, and more preferably 0.05 to 5 parts by mass, with respect to 100 parts by mass of the synthetic resin.

Examples of the phosphorus-based antioxidant include trisnonylphenyl phosphite, tris[2-t-butyl-4-(3-t-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-t-butylphenyl)pentaerythritol diphosphite, bis(2,6-di-t-butyl-4-methylphenyl)pentaerythritol diphosphite, bis(2,4,6-tri-t-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidenebis(2-t-butyl-5-methylphenol)diphosphite, hexa(tridecyl)-1,1,3-tris(2-methyl-4-hydroxy-5-t-butylphenyl)butane triphosphite, tetrakis(2,4-di-t-butylphenyl)biphenylene diphosphonite, 9,10-dihydro-9-oxa-10-phosphaphenanthrene-10-oxide, 2,2'-methylenebis(4,6-t-butylphenyl)-2-ethylhexyl phosphite, 2,2'-methylenebis(4,6-t-butylphenyl)-octadecyl phosphite, 2,2'-ethylidenebis(4,6-di-t-butylphenyl)fluorophosphite, tris(2-[(2,4,8,10-tetrakis-t-butyldibenzo[d,f][1,3,2]dioxaphosphepin-6-yl)oxy]ethyl)amine, phosphites of 2-ethyl-2-butyl propylene glycol and 2,4,6-tri-t-butylphenol, and the like.

These phosphorus-based antioxidants are used in an amount of preferably 0.001 to 10 parts by mass, and more preferably 0.05 to 5 parts by mass, with respect to 100 parts by mass of the synthetic resin.

Examples of the thioether-based antioxidant include dialkyl thiodipropionates such as dilauryl thiodipropionate, dimyristyl thiodipropionate, and distearyl thiodipropionate; and pentaerythritol tetrakis(β-alkylthiopropionates) such as pentaerythritol tetrakis(β-dodecylthiopropionate).

These thioether-based antioxidants are used in an amount of preferably 0.001 to 10 parts by mass, and more preferably 0.05 to 5 parts by mass, with respect to 100 parts by mass of the synthetic resin.

Examples of the ultraviolet absorber include 2-hydroxybenzophenones such as 2,4-dihydroxy benzophenone, 2-hydroxy-4-methoxy benzophenone, 2-hydroxy-4-octoxy benzophenone, and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-t-butylphenyl)-5-chlorobenzotriazole, 2-(2'-hydroxy-3'-t-butyl-5'-methylphenyl)-5-chlorobenzotriazole, 2-(2'-hydroxy-5'-t-octylphenyl)benzotriazole, 2-(2'-hydroxy-3',5'-dicumylphenyl)benzotriazole, 2,2'-methylenebis(4-t-octyl-6-(benzotriazolyl)phenol), and 2-(2'-hydroxy-3'-t-butyl-5'-carboxyphenyl)benzotriazole; benzoates such as phenyl salicyllate, resorcinol monobenzoate, 2,4-di-t-butylphenyl-3,5-di-t-butyl-4-hydroxybenzoate, 2,4-di-t-amylphenyl-3,5-di-t-butyl-4-hydroxybenzoate, and hexadecyl-3,5-di-t-butyl-4-hydroxybenzoate; substituted oxanilides such as 2-ethyl-2'-ethoxy oxanilide and 2-ethoxy4'-dodecyl oxanilide; cyanoacrylates such as ethyl-α-cyano-β,β-diphenyl acrylate and methyl-2-cyano-3-methyl-3-(p-methoxyphenyl)acrylate; and triaryltriazines such as 2-(2-hydroxy-4-octoxyphenyl)-4,6-bis(2,4-di-t-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-t-butylphenyl)-s-triazine.

These ultraviolet absorbers are used in an amount of preferably 0.001 to 10 parts by mass, and more preferably 0.05 to 5 parts by mass, with respect to 100 parts by mass of the synthetic resin.

Examples of the hindered amine-based light stabilizer include hindered amine compounds such as 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, bis(1,2,2,6,6-tetramethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)·di(tridecyl)-1,2,3,4-butanetetracarboxylate, bis(1,2,2,6,6-pentamethyl-4-piperidyl)·di(tridecyl)-1,2,3,4-butanetetracarboxylate, bis(1,2,2,4,4-pentamethyl-4-piperidyl)-2-butyl-2-(3,5-di-t-butyl-4-hydroxybenzyl)malonate, 1-(2-hydroxyethyl)-2,2,6,6-tetramethyl-4-piperidinol/succinic acid diethyl polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-t-octylamino-s-triazine polycondensate, 1,5,8,12-tetrakis[2,4-bis(N-butyl-N-(2,2,6,6-tetramethyl-4-piperidyl)amino)-s-triazine-6-yl]-1, 5,8,12-tetraazadodecane, 1,5,8,12-tetrakis[2,4-bis(N-butyl-N-(1,2,2,6,6-pentamethyl-4-piperidyl)amino)-s-triazine-6-yl ]-1,5,8-12-tetraazadodecane, 1,6,11-tris[2,4-bis(N-butyl-N-(2,2,6,6-tetramethyl-4-piperidyl)amino)-s-triazine-6-yl]aminoun decane, and 1,6,11-tris[2,4-bis(N-butyl-N-(1,2,2,6,6-pentamethyl-4-piperidyl)amino)-s-triazine-6-yl]amin oundecane.

These hindered amine-based light stabilizers are used in an amount of preferably 0.001 to 10 parts by mass, and more preferably 0.05 to 5 parts by mass, with respect to 100 parts by mass of the synthetic resin.

Examples of the antioxidant include a naphthylamine-based antioxidant, a diphenylamine-based antioxidant, a p-phenyldiamine-based antioxidant, a quinoline-based antioxidant, a hydroquinone derivative, a monophenol-based antioxidant, a thiobisphenol-based antioxidant, a hindered phenol-based antioxidant, a phosphorous acid ester-based antioxidant, and the like.

These antioxidants are used in an amount of preferably 0.001 to 10 parts by mass, and more preferably 0.05 to 5 parts by mass, with respect to 100 parts by mass of the synthetic resin.

The flame-retardant resin composition of the present invention may contain a reinforcement material as an optional component within the scope that does not impair the effects of the present invention. As the reinforcement material, it is possible to use fibrous, platy, particulate and powder reinforcement materials that are commonly used to reinforce synthetic resins. Specific examples thereof include inorganic fibrous reinforcement materials such as glass fibers, asbestos fibers, carbon fibers, graphite fibers, metal fibers, potassium titanate whisker, aluminum borate whisker, magnesium-based whisker, silicon-based whisker, wollastonite, sepiolite, asbestos, slug fibers, zonolite, ellestadite, gypsum fibers, silica fibers, silica-alumina fibers, zirconia fibers, boron nitride fibers, silicon nitride fibers, and boron fibers; organic fibrous reinforcement materials such as polyester fibers, nylon fibers, acrylic fibers, regenerated cellulose fibers, acetate fibers, kenaf, ramie, cotton, jute, hemp, sisal, flax, linen, silk, manila hemp, sugar cane, wood pulp, wastepaper, recycled wastepaper, and wool; and platy and particulate reinforcement materials such as glass flake, non-swelling mica, graphite, metal foil, ceramic bead, clay, mica, sericite, zeolite, bentonite, dolomite, kaolin, micronized silicic acid, feldspar powder, potassium titanate, shirasu-balloon, calcium carbonate, magnesium carbonate, barium sulfate, calcium oxide, aluminum oxide, titanium oxide, aluminum silicate, silicon oxide, gypsum, novaculite, dawsonite, and white clay.

These reinforcement materials may be coated with or bundled by a thermoplastic resin such as an ethylene/vinyl acetate copolymer or a thermosetting resin such as epoxy resin, or may be treated with a coupling agent such as amino silane or epoxy silane.

The flame-retardant resin composition of the present invention may further contain, as an optional component, a crystal nucleator within the scope that does not impair the effects of the present invention. As the crystal nucleator, a crystal nucleator commonly used for polymers can be used as appropriate, and in the present invention, it is possible to use either an inorganic crystal nucleator or an organic crystal nucleator.

Specific examples of the inorganic crystal nucleator include metallic salts such as kaolinite, synthetic mica, clay, zeolite, silica, graphite, carbon black, magnesium oxide, titanium oxide, calcium sulfide, boron nitride, calcium carbonate, barium sulfate, aluminum oxide, neodymium oxide, and phenylphosphonate. The inorganic crystal nucleators may be modified with an organic substance in order to enhance dispersibility in the composition.

Specific examples of the organic crystal nucleator include organic carboxylic acid metal salts such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexane carboxylate; organic sulfonic acid salts such as sodium p-toluenesulfonate and sodium sulfoisophthalate; carboxylic amides such as stearic amide, ethylenebis lauric amide, palmitic amide, hydroxy stearic amide, erucic amide, and trimesic acid tris(t-butylamide); benzylidene sorbitol and derivatives thereof; phosphorus compound metal salts such as sodium-2,2'-methylenebis(4,6-di-t-butylphenyl)phosphate; and 2,2-methylbis(4,6-di-t-butylphenyl)sodium.

The flame-retardant resin composition of the present invention may contain, as an optional component, a plasticizer within the scope that does not impair the effects of the present invention. As the plasticizer, a plasticizer commonly used for polymers can be used as appropriate, and examples thereof include a polyester-based plasticizer, a glycerin-based plasticizer, a polycarboxylic acid ester-based plasticizer, a polyalkylene glycol-based plasticizer, an epoxy-based plasticizer, and the like.

Specific examples of the polyester-based plasticizer include polyesters composed of an acid component such as adipic acid, sebacic acid, terephthalic acid, isophthalic acid, naphthalenedicarboxylic acid, diphenyl dicarboxylic acid, or rosin and a diol component such as propylene glycol, 1,3-butanediol, 1,4-butanediol, 1,6-hexanediol, ethylene glycol, or diethylene glycol; and polyesters composed of a hydroxycarboxylic acid such as polycaprolactone. The polyesters may be end-capped with a monofunctional carboxylic acid or a monofunctional alcohol, or may be end-capped with an epoxy compound or the like.

Specific examples of the glycerin-based plasticizer include glycerin monoaceto monolaurate, glycerin diaceto monolaurate, glycerin monoaceto monostearate, glycerin diaceto monooleate, glycerin monoaceto monomontanate, and the like. Specific examples of the polycarboxylic acid ester-based plasticizer include phthalic acid esters such as dimethyl phthalate, diethyl phthalate, dibutyl phthalate, dioctyl phthalate, diheptyl phthalate, dibenzyl phthalate, and butylbenzyl phthalate; trimellitic acid esters such as tributyl trimellitate, trioctyl trimellitate, and trihexyl trimellitate; adipic acid esters such as diisodecyl adipate, n-octyl-n-decyl adipate, methyldiglycol butyldiglycol adipate, benzylmethyl diglycol adipate, and benzylbutyl diglycol adipate; citric acid esters such as acetyl triethyl citrate and acetyl tributyl citrate; azelaic acid esters such as di-2-ethylhexyl azelate; and sebacic acid esters such as dibutyl sebacate, di-2-ethylhexyl sebacate, and the like.

Specific examples of the polyalkylene glycol-based plasticizer include polyalkylene glycols including polyethylene glycol, polypropylene glycol, poly(ethyleneoxide·propyleneoxide) blocks and/or random copolymers, polytetramethylene glycol, ethylene oxide addition polymers of bisphenols, propylene oxide addition polymers of bisphenols, tetrahydrofuran addition polymers of bisphenols; and end capping compounds such as an epoxy-end-modified compound, an ester-end-modified compound, and an ether-end-modified compound of the above-listed polyalkylene glycols.

In general, "epoxy-based plasticizer" refers to epoxy triglyceride composed of epoxy alkyl stearate and soybean oil, or the like, but it is also possible to use a so-called epoxy resin composed mainly of bisphenol A and epichlorohydrin.

Specific examples of other plasticizers include benzoic acid esters of aliphatic polyols, such as neopentyl glycol dibenzoate, diethylene glycol dibenzoate, and triethylene glycol di-2-ethyl butyrate; fatty acid amides such as amide stearate; aliphatic carboxylic acid esters such as butyl oleate; oxyacid esters such as methyl acetyl ricinoleate and butyl acetyl ricinoleate; pentaerythritol; various types of sorbitols; polyacrylic acid esters; paraffins; and the like.

The plasticizers, if used in the present invention, may be used alone or in a combination of two or more.

The flame-retardant resin composition of the present invention may contain, as an optional component, a lubricant within the scope that does not impair the effects of the present invention. As the lubricant, a lubricant that is usually used in synthetic resins can be used, and examples thereof include a hydrocarbon-based lubricant, a fatty acid-based lubricant, an aliphatic alcohol-based lubricant, an aliphatic ester-based lubricant, an aliphatic amide compound such as ethylenebisstearylamide, a metallic salt of aliphatic carboxylic acid, such as calcium stearate, or other lubricants such as a metallic soap-based lubricant, silicone oil, and the like.

The flame-retardant resin composition of the present invention may contain, as an optional component, a hydrolysis inhibitor (anti-hydrolysis agent) within the scope that does not impair the effects of the present invention. As the hydrolysis inhibitor, a hydrolysis inhibitor that is usually used in synthetic resins can be used, and examples thereof include a carbodiimide compound, an isocyanate compound, an oxazoline compound, and the like.

The carbodiimide compound is a compound that has at least one carbodiimide group in the molecule, and includes a polycarbodiimide compound having two or more functional groups. Examples of the monocarbodiimide compound include dicyclohexylcarbodiimide, diisopropylcarbodiimide, dimethylcarbodiimide, diisobutylcarbodiimide, dioctylcarbodiimide, diphenylcarbodiimide, naphthylcarbodiimide, and the like.

Examples of the polycarbodiimide compound include poly(dicyclohexylcarbodiimide), poly(isopropylcarbodiimide), poly(dimethylcarbodiimide), poly(diisobutylcarbodiimide), poly(dioctylcarbodiimide), poly(4,4'-diphenylmethane carbodiimide), poly(3,3'-dimethyl-4,4'-diphenylmethane carbodiimide), poly(tolylcarbodiimide), poly(p-phenylene carbodiimide), poly(m-phenylene carbodiimide), poly(1,3-diisopropylphenylene carbodiimide), poly(1-methyl-3,5-diisopropylphenylene carbodiimide), poly(1,3,5-triethylphenylene carbodiimide), poly(triisopropylphenylene carbodiimide), poly(naphthylcarbodiimide), and the like. These compounds may be used alone or in a combination of two or more.

Moreover, examples of the isocyanate compound include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, isophorone diisocyanate, 4,4'-dicyclohexylmethane diisocyanate, 3,3'-dimethyl-4,4'-dicyclohexylmethane diisocyanate, and the like.

Moreover, examples of the oxazoline compound include 2,2'-o-phenylenebis(2-oxazoline), 2,2'-m-phenylenebis(2-oxazoline), 2,2'-p-phenylenebis(2-oxazoline), 2,2'-p-phenylenebis(4-methyl-2-oxazoline), 2,2'-m-phenylenebis(4-methyl-2-oxazoline), 2,2'-p-phenylenebis(4,4'-dimethyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-ethylenebis(4-methyl-2-oxazoline), 2,2'-diphenylenebis(2-oxazoline), and the like. The hydrolysis inhibitors (anti-hydrolysis agents) may be used alone or in a combination of two or more.

In addition to the above-described components, the flame-retardant resin composition of the present invention may contain, where necessary, additives that are usually used in synthetic resins such as for example, a cross-linking agent, an antistatic agent, a metallic soap, a filler, an antifog agent, a plate-out preventing agent, a surface treating agent, a fluorescent agent, a fungicide, an antimicrobial agent, a foaming agent, a metal deactivating agent, a mold release agent, a pigment, a processing aid, a fluidity improver, a thickener, a thixotropy imparting agent, and a fumed silica within the scope that does not impair the effects of the present invention.

The above-described various components that can be added to the flame-retardant resin composition of the present invention can be added to the flame retardant composition of the present invention to prepare a flame retardant composition and then added to a synthetic resin, can be added to a synthetic resin separately from the flame retardant composition, or can be added to a synthetic resin at the same time as the flame retardant composition, within the scope that does not impair the effects of the present invention.

A molded product with excellent flame retardancy can be obtained by molding the flame-retardant resin composition of the present invention. There is no particular limitation on the molding method, and extrusion processing, calender processing, injection molding, rolling, compression molding, blow molding, and the like can be used. It is possible to produce molded products having various types of shapes such as a resin plate, a sheet, a film, and a profile.

The flame-retardant resin composition of the present invention can be used in housings (a frame, a casing, a cover, and an exterior component) and components for electric automobiles, machinery, electric and electronic devices, office automation equipment, and the like, as well as automobile interior and exterior materials, and so on.

The flame-retardant resin composition of the present invention and a molded body obtained therefrom can be used in a wide variety of industrial fields such as electric, electronic and communication fields, agriculture, forestry and fishery fields, mining, construction, foods, fibers, clothing, medical care, coal, petroleum, rubber, leather, automobiles, precision equipment, wood materials, building materials, public engineering materials, furniture, printing, and musical instruments. More specific examples thereof include housings (a frame, a casing, a cover, and an exterior component) and components for office supplies and office automation equipment such as a printer, a personal computer, a word processor, a keyboard, a PDA (personal digital assistant), a telephone, a copy machine, a facsimile machine, an ECR (electronic cash register), an electronic calculator, an electronic organizer, a card, a holder, and stationary, household electric appliances such as a washing machine, a refrigerator, a vacuum cleaner, a microwave oven, a luminaire, a gaming console, an iron, and a Japanese table heater, audiovisual (AV) equipment such as a television (TV) set, a videotape recorder (VTR), a video camera, a radio-cassette recorder, a tape recorder, a mini disc, a CD player, a speaker, and a liquid crystal display, electric and electronic components such as a connector, a relay, a capacitor, a switch, a printed-circuit board, a coil bobbin, a semiconductor sealing material, an LED sealing material, an electric wire, a cable, a transformer, a deflection yoke, a distribution switch board, and a clock, communication devices, office automation equipment, and automobile interior and exterior materials.

Furthermore, the flame-retardant resin composition of the present invention and the molded body obtained therefrom are used in a wide variety of applications: materials for automobile, hybrid car, electric vehicle, vehicle, vessel, aircraft, building, house and construction purposes such as a seat (padding, surface material, etc.), a belt, a ceiling covering, a convertible top cover, an armrest, a door trim, a rear package tray, a carpet, a mat, a sun visor, a wheel cover, a mattress cover, an airbag, an insulating material, a strap hanger, a strap hanger belt, an electric wire coating material, an electric insulating material, a paint, a coating material, a covering material, a floor material, a corner wall, a carpet, a wall paper, a wall covering material, an exterior material, an interior material, a roofing material, a decking material, a wall material, a post material, a floor plate, a fence material, a framework and a molding, a window and a door forming material, a shingle, a panel, a terrace, a balcony, a sound insulation plate, a heat insulation plate, and a window material; a public engineering material, clothing, a curtain, a sheet, a plywood board, a synthetic fiber plate, a rug, a door mat, a sheet, a bucket, a hose, a container, a pair of glasses, a bag, a case, a pair of goggles, a pair of skis, a racket, a tent, a music instrument, and other houseware goods and sports goods.

### Examples

Hereinafter, the present invention will be described in greater detail using examples.

### Example 1: Flame Retardant Composition-1 (Phosphoric Acid Ester Composition-1)

First, 1.05 g (0.011 mol) of magnesium chloride serving as a catalyst was added to 186.2 g (1.00 mol) of 4,4'-dihydroxybiphenyl, followed by the addition of 309.7 g (2.02 mol) of phosphorus oxychloride, to carry out a reaction at 80 to 100°C for three hours. After an excess of the phosphorus oxychloride was distilled off under reduced pressure, 329.4 g (3.50 mol) of phenol was added, to carry out a reaction at 120 to 140°C for seven hours. The resulting coarse product was dissolved in xylene and washed with an aqueous solution containing an acid, followed by dehydration and desolvation, and thus, a phosphoric acid ester composition-1 was obtained. The obtained phosphoric acid ester composition-1 was subjected to an IR analysis and an NMR analysis and confirmed to be a phosphoric acid ester represented by the above-described formula (1).

Moreover, a liquid chromatography measurement was performed under the measurement conditions below to obtain the amount of a compound corresponding to n = 1 in the formula (1) in the phosphoric acid ester composition-1, with respect to the total amount of compounds corresponding to n = 1 to 5, and the amount was found to be 60.3 mass% (the total amount of compounds corresponding to n = 2 to 5 in the composition was 39.7 mass%). Moreover, in the phosphoric acid ester composition-1, the amount of compounds corresponding to n = 6 and 7 was less than 1 mass%.

The obtained phosphoric acid ester composition-1 was in liquid form at 25°C.

The viscosity of the obtained phosphoric acid ester composition-1 was measured using a measurement method below. Table 1 shows the results.

The storage stability of the obtained phosphoric acid ester composition-1 was evaluated using a storage stability test method below. Table 1 shows the results.

### Example 2: Flame Retardant Composition-2 (Phosphoric Acid Ester Composition-2)

First, 1.05 g (0.011 mol) of magnesium chloride serving as a catalyst was added to 186.2 g (1.00 mol) of 4,4'-dihydroxybiphenyl, followed by the addition of 312.8 g (2.04 mol) of phosphorus oxychloride, to carry out a reaction at 80 to 100°C for three hours. After an excess of the phosphorus oxychloride was distilled off under reduced pressure, 329.4 g (3.50 mol) of phenol was added, to carry out a reaction at 120 to 140°C for seven hours. The resulting coarse product was dissolved in xylene and washed with an aqueous solution containing an acid, followed by dehydration and desolvation, and thus, a phosphoric acid ester composition-2 was obtained. The obtained phosphoric acid ester composition-2 was subjected to an IR analysis and an NMR analysis and confirmed to be a phosphoric acid ester represented by the above-described formula (1).

A liquid chromatography measurement was performed under the measurement conditions below to obtain the amount of a compound corresponding to n = 1 in the formula (1) in the phosphoric acid ester composition-2, with respect to the total amount of compounds corresponding to n = 1 to 5, and the amount was found to be 61.2 mass% (the total amount of compounds corresponding to n = 2 to 5 in the composition was 38.8 mass%). Moreover, in the phosphoric acid ester composition-2, the amount of compounds corresponding to n = 6 and 7 was less than 1 mass%.

The obtained phosphoric acid ester composition-2 was in liquid form at 25°C.

The viscosity of the obtained phosphoric acid ester composition-2 was measured using the measurement method below. Table 1 shows the results.

The storage stability of the obtained phosphoric acid ester composition-2 was evaluated using the storage stability test method below. Table 1 shows the results.

### Example 3: Flame Retardant Composition-3 (Phosphoric Acid Ester Composition-3)

First, 1.05 g (0.011 mol) of magnesium chloride serving as a catalyst was added to 186.2 g (1.00 mol) of 4,4'-dihydroxybiphenyl, followed by the addition of 315.8 g (2.06 mol) of phosphorus oxychloride, to carry out a reaction at 80 to 100°C for three hours. After an excess of the phosphorus oxychloride was distilled off under reduced pressure, 329.4 g (3.50 mol) of phenol was added, to carry out a reaction at 120 to 140°C for seven hours. The resulting coarse product was dissolved in xylene and washed with an aqueous solution containing an acid, followed by dehydration and desolvation, and thus, a phosphoric acid ester composition-3 was obtained. The obtained phosphoric acid ester composition-3 was subjected to an IR analysis and an NMR analysis and confirmed to be a phosphoric acid ester represented by the above-described formula (1).

A liquid chromatography measurement was performed under the measurement conditions below to obtain the amount of a compound corresponding to n = 1 in the formula (1) in the phosphoric acid ester composition-3, with respect to the total amount of compounds corresponding to n = 1 to 5, and the amount was found to be 62.1 mass% (the total amount of compounds corresponding to n = 2 to 5 in the composition was 37.9 mass%). Moreover, in the phosphoric acid ester composition-3, the amount of compounds corresponding to n = 6 and 7 was less than 1 mass%.

The obtained phosphoric acid ester composition-3 was in liquid form at 25°C.

The viscosity of the obtained phosphoric acid ester composition-3 was measured using the measurement method below. Table 1 shows the results.

The storage stability of the obtained phosphoric acid ester composition-3 was evaluated using the storage stability test method below. Table 1 shows the results.

### Example 4: Flame Retardant Composition-4 (Phosphoric Acid Ester Composition-4)

First, 1.05 g (0.011 mol) of magnesium chloride serving as a catalyst was added to 186.2 g (1.00 mol) of 4,4'-dihydroxybiphenyl, followed by the addition of 318.9 g (2.08 mol) of phosphorus oxychloride, to carry out a reaction at 80 to 100°C for three hours. After an excess of the phosphorus oxychloride was distilled off under reduced pressure, 329.4 g (3.50 mol) of phenol was added, to carry out a reaction at 120 to 140°C for seven hours. The resulting coarse product was dissolved in xylene and washed with an aqueous solution containing an acid, followed by dehydration and desolvation, and thus, a phosphoric acid ester composition-4 was obtained. The obtained phosphoric acid ester composition-4 was subjected to an IR analysis and an NMR analysis and confirmed to be a phosphoric acid ester represented by the above-described formula (1).

A liquid chromatography measurement was performed under the measurement conditions below to obtain the amount of a compound corresponding to n = 1 in the formula (1) in the phosphoric acid ester composition-4, with respect to the total amount of compounds corresponding to n = 1 to 5, and the amount was found to be 63.0 mass% (the total amount of compounds corresponding to n = 2 to 5 in the composition was 37.0 mass%). Moreover, in the phosphoric acid ester composition-4, the amount of compounds corresponding to n = 6 and 7 was less than 1 mass%.

The obtained phosphoric acid ester composition-4 was in liquid form at 25°C.

The viscosity of the obtained phosphoric acid ester composition-4 was measured using the measurement method below. Table 1 shows the results.

The storage stability of the obtained phosphoric acid ester composition-4 was evaluated using the storage stability test method below. Table 1 shows the results.

### Example 5: Flame Retardant Composition-5 (Phosphoric Acid Ester Composition-5)

First, 1.05 g (0.011 mol) of magnesium chloride serving as a catalyst was added to 186.2 g (1.00 mol) of 4,4'-dihydroxybiphenyl, followed by the addition of 335.8 g (2.19 mol) of phosphorus oxychloride, to carry out a reaction at 80 to 100°C for three hours. After an excess of the phosphorus oxychloride was distilled off under reduced pressure, 329.4 g (3.50 mol) of phenol was added, to carry out a reaction at 120 to 140°C for seven hours. The resulting coarse product was dissolved in xylene and washed with an aqueous solution containing an acid, followed by dehydration and desolvation, and thus, a phosphoric acid ester composition-5 was obtained. The obtained phosphoric acid ester composition-5 was subjected to an IR analysis and an NMR analysis and confirmed to be a phosphoric acid ester represented by the above-described formula (1).

A liquid chromatography measurement was performed under the measurement conditions below to obtain the amount of a compound corresponding to n = 1 in the formula (1) in the phosphoric acid ester composition-5, with respect to the total amount of compounds corresponding to n = 1 to 5, and the amount was found to be 67.9 mass% (the total amount of compounds corresponding to n = 2 to 5 in the composition was 32.1 mass%). Moreover, in the phosphoric acid ester composition-5, the amount of compounds corresponding to n = 6 and 7 was less than 1 mass%.

The obtained phosphoric acid ester composition-5 was in liquid form at 25°C.

The viscosity of the obtained phosphoric acid ester composition-5 was measured using the measurement method below. Table 1 shows the results.

The storage stability of the obtained phosphoric acid ester composition-5 was evaluated using the storage stability test method below. Table 1 shows the results.

### Example 6: Flame Retardant Composition-6 (Phosphoric Acid Ester Composition-6)

First, 1.05 g (0.011 mol) of magnesium chloride serving as a catalyst was added to 186.2 g (1.00 mol) of 4,4'-dihydroxybiphenyl, followed by the addition of 341.9 g (2.23 mol) of phosphorus oxychloride, to carry out a reaction at 80 to 100°C for three hours. After an excess of the phosphorus oxychloride was distilled off under reduced pressure, 329.4 g (3.50 mol) of phenol was added, to carry out a reaction at 120 to 140°C for seven hours. The resulting coarse product was dissolved in xylene and washed with an aqueous solution containing an acid, followed by dehydration and desolvation, and thus, a phosphoric acid ester composition-6 was obtained. The obtained phosphoric acid ester composition-6 was subjected to an IR analysis and an NMR analysis and confirmed to be a phosphoric acid ester represented by the above-described formula (1).

A liquid chromatography measurement was performed under the measurement conditions below to obtain the amount of a compound corresponding to n = 1 in the formula (1) in the phosphoric acid ester composition-6, with respect to the total amount of compounds corresponding to n = 1 to 5, and the amount was found to be 68.8 mass% (the total amount of compounds corresponding to n = 2 to 5 in the composition was 31.2 mass%). Moreover, in the phosphoric acid ester composition-6, the amount of compounds corresponding to n = 6 and 7 was less than 1 mass%.

The obtained phosphoric acid ester composition-6 was in liquid form at 25°C.

The viscosity of the obtained phosphoric acid ester composition-6 was measured using the measurement method below. Table 1 shows the results.

The storage stability of the obtained phosphoric acid ester composition-6 was evaluated using the storage stability test method below. Table 1 shows the results.

### Example 7: Flame Retardant Composition-7 (Phosphoric Acid Ester Composition-7)

First, 1.05 g (0.011 mol) of magnesium chloride serving as a catalyst was added to 186.2 g (1.00 mol) of 4,4'-dihydroxybiphenyl, followed by the addition of 346.5 g (2.26 mol) of phosphorus oxychloride, to carry out a reaction at 80 to 100°C for three hours. After an excess of the phosphorus oxychloride was distilled off under reduced pressure, 329.4 g (3.50 mol) of phenol was added, to carry out a reaction at 120 to 140°C for seven hours. The resulting coarse product was dissolved in xylene and washed with an aqueous solution containing an acid, followed by dehydration and desolvation, and thus, a phosphoric acid ester composition-7 was obtained. The obtained phosphoric acid ester composition-7 was subjected to an IR analysis and an NMR analysis and confirmed to be a phosphoric acid ester represented by the above-described formula (1).

A liquid chromatography measurement was performed under the measurement conditions below to obtain the amount of a compound corresponding to n = 1 in the formula (1) in the phosphoric acid ester composition-7, with respect to the total amount of compounds corresponding to n = 1 to 5, and the amount was found to be 69.5 mass% (the total amount of compounds corresponding to n = 2 to 5 in the composition was 30.5 mass%). Moreover, in the phosphoric acid ester composition-7, the amount of compounds corresponding to n = 6 and 7 was less than 1 mass%.

The obtained phosphoric acid ester composition-7 was in liquid form at 25°C.

The viscosity of the obtained phosphoric acid ester composition-7 was measured using the measurement method below. Table 1 shows the results.

The storage stability of the obtained phosphoric acid ester composition-7 was evaluated using the storage stability test method below. Table 1 shows the results.

### Comparative Example 1: Comparative Flame Retardant Composition-1 (Comparative Phosphoric Acid Ester Composition-1)

First, 1.05 g (0.011 mol) of magnesium chloride serving as a catalyst was added to 186.2 g (1.00 mol) of 4,4'-dihydroxybiphenyl, followed by the addition of 306.6 g (2.00 mol) of phosphorus oxychloride, to carry out a reaction at 80 to 100°C for three hours. After an excess of the phosphorus oxychloride was distilled off under reduced pressure, 329.4 g (3.50 mol) of phenol was added, to carry out a reaction at 120 to 140°C for seven hours. The resulting coarse product was dissolved in xylene and washed with an aqueous solution containing an acid, followed by dehydration and desolvation, and thus, a comparative phosphoric acid ester composition-1 was obtained. The obtained comparative phosphoric acid ester composition-1 was subjected to an IR analysis and an NMR analysis and confirmed to be a phosphoric acid ester represented by the above-described formula (1).

A liquid chromatography measurement was performed under the measurement conditions below to obtain the amount of a compound corresponding to n = 1 in the formula (1) in the comparative phosphoric acid ester composition-1, with respect to the total amount of compounds corresponding to n = 1 to 5, and the amount was found to be 59.0 mass% (the total amount of compounds corresponding to n = 2 to 5 in the composition was 41.0 mass%). Moreover, in the comparative phosphoric acid ester composition-1, the amount of compounds corresponding to n = 6 and 7 in the composition was less than 1 mass%.

The obtained comparative phosphoric acid ester composition-1 was in liquid form at 25°C.

The viscosity of the obtained comparative phosphoric acid ester composition-1 was measured using the measurement method below. Table 1 shows the results.

The storage stability of the obtained comparative phosphoric acid ester composition-1 was evaluated using the storage stability test method below. Table 1 shows the results.

### Comparative Example 2: Comparative Flame Retardant Composition-2 (Comparative Phosphoric Acid Ester Composition-2)

First, 1.05 g (0.011 mol) of magnesium chloride serving as a catalyst was added to 186.2 g (1.00 mol) of 4,4'-dihydroxybiphenyl, followed by the addition of 349.6 g (2.28 mol) of phosphorus oxychloride, to carry out a reaction at 80 to 100°C for three hours. After an excess of the phosphorus oxychloride was distilled off under reduced pressure, 329.4 g (3.50 mol) of phenol was added, to carry out a reaction at 120 to 140°C for seven hours. The resulting coarse product was dissolved in xylene and washed with an aqueous solution containing an acid, followed by dehydration and desolvation, and thus, a comparative phosphoric acid ester composition-2 was obtained. The obtained comparative phosphoric acid ester composition-2 was subjected to an IR analysis and an NMR analysis and confirmed to be a phosphoric acid ester represented by the above-described formula (1).

A liquid chromatography measurement was performed under the measurement conditions below to obtain the amount of a compound corresponding to n = 1 in the formula (1) in the comparative phosphoric acid ester composition-2, with respect to the total amount of compounds corresponding to n = 1 to 5, and the amount was found to be 70.2 mass% (the total amount of compounds corresponding to n = 2 to 5 in the composition was 29.8 mass%). Moreover, in the comparative phosphoric acid ester composition-2, the amount of compounds corresponding to n = 6 and 7 was less than 1 mass%.

The obtained comparative phosphoric acid ester composition-2 was in liquid form at 25°C.

The viscosity of the obtained comparative phosphoric acid ester composition-2 was measured using the measurement method below. Table 1 shows the results.

The storage stability of the obtained comparative phosphoric acid ester composition-2 was evaluated using the storage stability test method below. Table 1 shows the results.

### Comparative Example 3: Comparative Flame Retardant Composition-3 (Comparative Phosphoric Acid Ester Composition-3)

First, 1.05 g (0.011 mol) of magnesium chloride serving as a catalyst was added to 186.2 g (1.00 mol) of 4,4'-dihydroxybiphenyl, followed by the addition of 368.0 g (2.40 mol) of phosphorus oxychloride, to carry out a reaction at 80 to 100°C for three hours. After an excess of the phosphorus oxychloride was distilled off under reduced pressure, 329.4 g (3.50 mol) of phenol was added, to carry out a reaction at 120 to 140°C for seven hours. The resulting coarse product was dissolved in xylene and washed with an aqueous solution containing an acid, followed by dehydration and desolvation, and thus, a comparative phosphoric acid ester composition-3 was obtained. The obtained comparative phosphoric acid ester composition-3 was subjected to an IR analysis and an NMR analysis and confirmed to be a phosphoric acid ester represented by the above-described formula (1).

A liquid chromatography measurement was performed under the measurement conditions below to obtain the amount of a compound corresponding to n = 1 in the formula (1) in the comparative phosphoric acid ester composition-3, with respect to the total amount of compounds corresponding to n = 1 to 5, and the amount was found to be 72.4 mass% (the total amount of compounds corresponding to n = 2 to 5 in the composition was 27.6 mass%). Moreover, in the comparative phosphoric acid ester composition-3, the amount of compounds corresponding to n = 6 and 7 was less than 1 mass%.

The obtained comparative phosphoric acid ester composition-3 was in liquid form at 25°C.

The viscosity of the obtained comparative phosphoric acid ester composition-3 was measured using the measurement method below. Table 1 shows the results.

The storage stability of the obtained comparative phosphoric acid ester composition-3 was evaluated using the storage stability test method below. Table 1 shows the results.

Note that, in each of the flame retardant compositions-1 to 7 and the comparative flame retardant compositions 1 to 3, the amount of compounds having n being 6 and 7 in the formula (1) was less than 1 mass%.

### Liquid Chromatography Measurement Conditions

Device: manufactured by JASCO Corporation, Pump (PU-2089 PLUS), Detector (MD 2018 PLUS)
Column: manufactured by Senshu Scientific Co., Ltd. (PEGASIL ODS ϕ4.6 mm × L250 mm)
Column temperature: 40°C
Detection wavelength: 261 nm
Eluent: MeOH/0.3% aqueous solution of phosphoric acid

### Method for Measuring Viscosity

Testing device: B type viscometer (manufactured by Eko Instruments Co., Ltd.)

Measurement method: The measurement was performed in the following manner in conformity with the JIS K 7117-1 standard.

A sample was kept in a constant temperature bath at 25°C for one hour. After that, the viscosity of the sample was measured using the B type viscometer. The measurement was performed using a small-quantity sample adapter and a spindle No. SC4-31, at a rotation speed of 0.6 rpm.

### Storage Stability Test

First, 30 g of a phosphoric acid ester composition (flame retardant composition) was placed into a sample bottle made of glass. In order to conduct an accelerated test for storage stability, 0.03g of seed crystals was added into the bottle, and the bottle was stoppered tightly. (A phosphoric acid ester that was solid at 25°C and that contained a compound corresponding to n = 1 in the formula (1) in an amount of 92 mass% with respect to the total amount of compounds corresponding to n = 1 to 5 was used as the seed crystals.)

The sample bottle was stored in a constant temperature bath at 25°C. The Haze value and the total luminous transmittance were measured before the storage, and three months after the storage, using a Haze-Gard Plus (manufactured by Toyo Seiki Seisaku-sho, Ltd.).

A higher haze value indicates the occurrence of turbidness, solid deposition, or solidification, which means a lower degree of storage stability. Also, a lower transmittance indicates the occurrence of turbidness, solid deposition, or solidification, which means a lower degree of storage stability.

### Example 8: Flame-Retardant Resin Composition-1

A flame-retardant polycarbonate resin composition with a combination ratio shown in Table 2 below was prepared using the flame retardant composition-1 (phosphoric acid ester composition-1) produced in Example 1. The prepared flame-retardant polycarbonate resin composition was extruded under the processing conditions below, and thus, pellets of the flame-retardant polycarbonate resin composition were produced. Since the flame retardant composition-1 had favorable fluidity at normal temperature (25°C), the flame-retardant polycarbonate resin composition had excellent handling properties and was able to be easily processed in a short period of time, and thus, was evaluated as having good handling properties and good processability.

A flame retardancy test specimen was produced from the produced pellets by performing injection molding under the conditions below. A flame retardancy test (UL-94 V test) was conducted using this test specimen in accordance with a test method below. Table 2 shows the results.

### Example 9: Flame-Retardant Resin Composition-2

A flame-retardant polycarbonate resin composition with a combination ratio shown in Table 2 below was prepared using the flame retardant composition-2 (phosphoric acid ester composition-2) produced in Example 2. The prepared flame-retardant polycarbonate resin composition was extruded under the processing conditions below, and thus, pellets of the flame-retardant polycarbonate resin composition were produced. Since the flame retardant composition-2 had favorable fluidity at normal temperature (25°C), the flame-retardant polycarbonate resin composition had excellent handling properties and was able to be easily processed in a short period of time, and thus, was evaluated as having good handling properties and good processability.

A flame retardancy test specimen was produced from the produced pellets by performing injection molding under the conditions below. A flame retardancy test (UL-94 V test) was conducted using this test specimen in accordance with the test method below. Table 2 shows the results.

### Example 10: Flame-Retardant Resin Composition-3

A flame-retardant polycarbonate resin composition with a combination ratio shown in Table 2 below was prepared using the flame retardant composition-3 (phosphoric acid ester composition-3) produced in Example 3. The prepared flame-retardant polycarbonate resin composition was extruded under the processing conditions below, and thus, pellets of the flame-retardant polycarbonate resin composition were produced. Since the flame retardant composition-3 had favorable fluidity at normal temperature (25°C), the flame-retardant polycarbonate resin composition had excellent handling properties and was able to be easily processed in a short period of time, and thus, was evaluated as having good handling properties and good processability.

A flame retardancy test specimen was produced from the produced pellets by performing injection molding under the conditions below. A flame retardancy test (UL-94 V test) was conducted using this test specimen in accordance with the test method below. Table 2 shows the results.

### Example 11: Flame-Retardant Resin Composition-4

A flame-retardant polycarbonate resin composition with a combination ratio shown in Table 2 below was prepared using the flame retardant composition-4 (phosphoric acid ester composition-4) produced in Example 4. The prepared flame-retardant polycarbonate resin composition was extruded under the processing conditions below, and thus, pellets of the flame-retardant polycarbonate resin composition were produced. Since the flame retardant composition-4 had favorable fluidity at normal temperature (25°C), the flame-retardant polycarbonate resin composition had excellent handling properties and was able to be easily processed in a short period of time, and thus, was evaluated as having good handling properties and good processability.

A flame retardancy test specimen was produced from the produced pellets by performing injection molding under the conditions below. A flame retardancy test (UL-94 V test) was conducted using this test specimen in accordance with the test method below. Table 2 shows the results.

### Example 12: Flame-Retardant Resin Composition-5

A flame-retardant polycarbonate resin composition with a combination ratio shown in Table 2 below was prepared using the flame retardant composition-5 (phosphoric acid ester composition-5) produced in Example 5. The prepared flame-retardant polycarbonate resin composition was extruded under the processing conditions below, and thus, pellets of the flame-retardant polycarbonate resin composition were produced. Since the flame retardant composition-5 had favorable fluidity at normal temperature (25°C), the flame-retardant polycarbonate resin composition had excellent handling properties and was able to be easily processed in a short period of time, and thus, was evaluated as having good handling properties and good processability.

A flame retardancy test specimen was produced from the produced pellets by performing injection molding under the conditions below. A flame retardancy test (UL-94 V test) was conducted using this test specimen in accordance with the test method below. Table 2 shows the results.

### Example 13: Flame-Retardant Resin Composition-6

A flame-retardant polycarbonate resin composition with a combination ratio shown in Table 2 below was prepared using the flame retardant composition-6 (phosphoric acid ester composition-6) produced in Example 6. The prepared flame-retardant polycarbonate resin composition was extruded under the processing conditions below, and thus, pellets of the flame-retardant polycarbonate resin composition were produced. Since the flame retardant composition-6 had favorable fluidity at normal temperature (25°C), the flame-retardant polycarbonate resin composition had excellent handling properties and was able to be easily processed in a short period of time, and thus, was evaluated as having good handling properties and good processability.

A flame retardancy test specimen was produced from the produced pellets by performing injection molding under the conditions below. A flame retardancy test (UL-94 V test) was conducted using this test specimen in accordance with the test method below. Table 2 shows the results.

### Example 14: Flame-Retardant Resin Composition-7

A flame-retardant polycarbonate resin composition with a combination ratio shown in Table 2 below was prepared using the flame retardant composition-7 (phosphoric acid ester composition-7) produced in Example 7. The prepared flame-retardant polycarbonate resin composition was extruded under the processing conditions below, and thus, pellets of the flame-retardant polycarbonate resin composition were produced. Since the flame retardant composition-7 had favorable fluidity at normal temperature (25°C), the flame-retardant polycarbonate resin composition had excellent handling properties and was able to be easily processed in a short period of time, and thus, was evaluated as having good handling properties and good processability.

A flame retardancy test specimen was produced from the produced pellets by performing injection molding under the conditions below. A flame retardancy test (UL-94 V test) was conducted using this test specimen in accordance with the test method below. Table 2 shows the results.

### Comparative Example 4: Comparative Flame-Retardant Resin Composition-1

A flame-retardant polycarbonate resin composition with a combination ratio shown in Table 2 below was prepared using the comparative flame retardant composition-1 (comparative phosphoric acid ester composition-1) produced in Comparative Example 1. The prepared flame-retardant polycarbonate resin composition was extruded under the processing conditions below, and thus, pellets of the flame-retardant polycarbonate resin composition were produced. Since the comparative flame retardant composition-1 had poor fluidity at normal temperature (25°C), the handling properties were inferior, and the processing took a lot of labor and a long period of time. Thus, the flame-retardant polycarbonate resin composition was evaluated as having poor handling properties and poor processability.

A flame retardancy test specimen was produced from the produced pellets by performing injection molding under the conditions below. A flame retardancy test (UL-94 V test) was conducted using this test specimen in accordance with the test method below. Table 2 shows the results.

### Processing Conditions

Extruder: PCM30-38-3 V-ISE (manufactured by Ikegai Corporation)
Temperature: 280°C
Screw: twin-screw
Number of revolutions: 100 rpm

### Injection Molding Conditions

Horizontal injection molding machine: NEX-80-9E (manufactured by Nissei Plastic Industrial Co., Ltd.)
Temperature: 280°C, Mold temperature: 80°C

### UL-94V Flame Retardancy Test Method

A test specimen with a length of 127 mm, a width of 12.7 mm, and a thickness of 1.6 mm was held vertically, and the flame of a burner was applied to a lower end of the test specimen for ten seconds and then removed, and the time taken until the flame on the test specimen extinguished was measured. Next, the flame of the burner was applied for ten seconds for the second time at the same time when the flame on the test specimen extinguished, and the time taken until the flame on the test specimen extinguished was measured in the same manner as in the first time. At the same time, evaluation was made as to whether or not a cotton pad placed below the test specimen was burnt due to burning drips dropping thereon.

Then, the test specimen was rated in accordance with the UL-94V standard based on the burning time obtained from the first measurement and the second measurement, whether or not the cotton pad was burnt, and the like. V-0 indicates the highest rate, and the flame retardancy decreases as the rating number increases such as V-1 and V-2. A rate of NR was given to a test specimen that was not rated as any of the ratings V-0 to V-2.

### Example 15: Flame-Retardant Resin Composition-8

A flame-retardant polyphenylene ether resin composition with a combination ratio shown in Table 3 below was prepared using the flame retardant composition-1 (phosphoric acid ester composition-1) produced in Example 1. The prepared flame-retardant polycarbonate resin composition was extruded under the processing conditions above, and thus, pellets of the flame-retardant polyphenylene ether resin composition were produced. Since the flame retardant composition-1 had favorable fluidity at normal temperature (25°C), the flame-retardant polyphenylene ether resin composition had excellent handling properties and was able to be easily processed in a short period of time, and thus, was evaluated as having good handling properties and good processability.

A flame retardancy test specimen was produced from the produced pellets by performing injection molding under the conditions above. A flame retardancy test (UL-94 V test) was conducted using this test specimen in accordance with the test method above. Table 3 shows the results.

### Example 16: Flame-Retardant Resin Composition-9

A flame-retardant polyphenylene ether resin composition with a combination ratio shown in Table 3 below was prepared using the flame retardant composition-2 (phosphoric acid ester composition-2) produced in Example 2. The prepared flame-retardant polycarbonate resin composition was extruded under the processing conditions above, and thus, pellets of the flame-retardant polyphenylene ether resin composition were produced. Since the flame retardant composition-2 had favorable fluidity at normal temperature (25°C), the flame-retardant polyphenylene ether resin composition had excellent handling properties and was able to be easily processed in a short period of time, and thus, was evaluated as having good handling properties and good processability.

A flame retardancy test specimen was produced from the produced pellets by performing injection molding under the conditions above. A flame retardancy test (UL-94 V test) was conducted using this test specimen in accordance with the test method above. Table 3 shows the results.

### Example 17: Flame-Retardant Resin Composition-10

A flame-retardant polyphenylene ether resin composition with a combination ratio shown in Table 3 below was prepared using the flame retardant composition-3 (phosphoric acid ester composition-3) produced in Example 3. The prepared flame-retardant polycarbonate resin composition was extruded under the processing conditions above, and thus, pellets of the flame-retardant polyphenylene ether resin composition were produced. Since the flame retardant composition-3 had favorable fluidity at normal temperature (25°C), the flame-retardant polyphenylene ether resin composition had excellent handling properties and was able to be easily processed in a short period of time, and thus, was evaluated as having good handling properties and good processability.

A flame retardancy test specimen was produced from the produced pellets by performing injection molding under the conditions above. A flame retardancy test (UL-94 V test) was conducted using this test specimen in accordance with the test method above. Table 3 shows the results.

### Example 18: Flame-Retardant Resin Composition-11

A flame-retardant polyphenylene ether resin composition with a combination ratio shown in Table 3 below was prepared using the flame retardant composition-4 (phosphoric acid ester composition-4) produced in Example 4. The prepared flame-retardant polycarbonate resin composition was extruded under the processing conditions above, and thus, pellets of the flame-retardant polyphenylene ether resin composition were produced. Since the flame retardant composition-4 had favorable fluidity at normal temperature (25°C), the flame-retardant polyphenylene ether resin composition had excellent handling properties and was able to be easily processed in a short period of time, and thus, was evaluated as having good handling properties and good processability.

A flame retardancy test specimen was produced from the produced pellets by performing injection molding under the conditions above. A flame retardancy test (UL-94 V test) was conducted using this test specimen in accordance with the test method above. Table 3 shows the results.

### Example 19: Flame-Retardant Resin Composition-12

A flame-retardant polyphenylene ether resin composition with a combination ratio shown in Table 3 below was prepared using the flame retardant composition-5 (phosphoric acid ester composition-5) produced in Example 5. The prepared flame-retardant polycarbonate resin composition was extruded under the processing conditions above, and thus, pellets of the flame-retardant polyphenylene ether resin composition were produced. Since the flame retardant composition-5 had favorable fluidity at normal temperature (25°C), the flame-retardant polyphenylene ether resin composition had excellent handling properties and was able to be easily processed in a short period of time, and thus, was evaluated as having good handling properties and good processability.

A flame retardancy test specimen was produced from the produced pellets by performing injection molding under the conditions above. A flame retardancy test (UL-94 V test) was conducted using this test specimen in accordance with the test method above. Table 3 shows the results.

### Example 20: Flame-Retardant Resin Composition-13

A flame-retardant polyphenylene ether resin composition with a combination ratio shown in Table 3 below was prepared using the flame retardant composition-6 (phosphoric acid ester composition-6) produced in Example 6. The prepared flame-retardant polycarbonate resin composition was extruded under the processing conditions above, and thus, pellets of the flame-retardant polyphenylene ether resin composition were produced. Since flame retardant composition-6 had favorable fluidity at normal temperature (25°C), the flame-retardant polyphenylene ether resin composition had excellent handling properties and was able to be easily processed in a short period of time, and thus, was evaluated as having good handling properties and good processability.

A flame retardancy test specimen was produced from the produced pellets by performing injection molding under the conditions above. A flame retardancy test (UL-94 V test) was conducted using this test specimen in accordance with the test method above. Table 3 shows the results.

### Example 21: Flame-Retardant Resin Composition-14

A flame-retardant polyphenylene ether resin composition with a combination ratio shown in Table 3 below was prepared using the flame retardant composition-7 (phosphoric acid ester composition-7) produced in Example 7. The prepared flame-retardant polycarbonate resin composition was extruded under the processing conditions above, and thus, pellets of the flame-retardant polyphenylene ether resin composition were produced. Since the flame retardant composition-7 had favorable fluidity at normal temperature (25°C), the flame-retardant polyphenylene ether resin composition had excellent handling properties and was able to be easily processed in a short period of time, and thus, was evaluated as having good handling properties and good processability.

A flame retardancy test specimen was produced from the produced pellets by performing injection molding under the conditions above. A flame retardancy test (UL-94 V test) was conducted using this test specimen in accordance with the test method above. Table 3 shows the results.

### Comparative Example 5: Comparative Flame-Retardant Resin Composition-2

A flame-retardant polyphenylene ether resin composition with a combination ratio shown in Table 3 below was prepared using the comparative flame retardant composition-1 (comparative phosphoric acid ester composition-1) produced in Comparative Example 1. The prepared flame-retardant polycarbonate resin composition was extruded under the processing conditions above, and thus, pellets of the flame-retardant polyphenylene ether resin composition were produced. Since the comparative flame retardant composition-1 had poor fluidity at normal temperature (25°C), the handling properties were inferior, and the processing took a lot of labor and a long period of time. Thus, the flame-retardant polyphenylene ether resin composition was evaluated as having poor handling properties and poor processability.

A flame retardancy test specimen was produced from the produced pellets by performing injection molding under the conditions above. A flame retardancy test (UL-94 V test) was conducted using this test specimen in accordance with the test method above. Table 3 shows the results.

**Table 1**

| | | | Ex. | | | | | | | Com. Ex. | | |
|---|---|---|---|---|---|---|---|---|---|---|---|---|
| | | | 1 | 2 | 3 | 4 | 5 | 6 | 7 | 1 | 2 | 3 |
| Flame retardant composition | | | Phosphoric acid ester composition-1 | Phosphoric acid ester composition-2 | Phosphoric acid ester composition-3 | Phosphoric acid ester composition-4 | Phosphoric acid ester composition-5 | Phosphoric acid ester composition-6 | Phosphoric acid ester composition-7 | Comparative phosphoric acid ester composition-1 | Comparative phosphoric acid ester composition-2 | Comparative phosphoric acid ester composition-3 |
| Amount^{*1} of compound having n = 1 contained (mass%) | | | 60.3 | 61.2 | 62.1 | 63.0 | 67.9 | 68.8 | 69.5 | 59.0 | 70.2 | 72.4 |
| Amount^{*2} of compounds having n = 2 to 5 contained (mass%) | | | 39.7 | 38.8 | 37.9 | 37.0 | 32.1 | 31.2 | 30.5 | 41.0 | 29.8 | 27.6 |
| Viscosity (mPa•s) | | | 36000 | 31000 | 27700 | 25600 | 19900 | 18700 | 18200 | 45600 | 17100 | 15700 |
| Storage stabilit y test | Haze value (%) | Before storage | 82 | 82 | 83 | 82 | 83 | 83 | 83 | 82 | 82 | 82 |
| | | After three month s | 104 | 105 | 105 | 106 | 107 | 108 | 109 | 104 | 110 | 111 |
| | Transmittanc e (%) | Before storage | 83 | 85 | 86 | 85 | 85 | 84 | 87 | 85 | 86 | 84 |
| | | After three month s | 69 | 69 | 68 | 68 | 61 | 54 | 48 | 69 | 27 | 1.9 |

| | | | | | | | | | | | | |
|---|---|---|---|---|---|---|---|---|---|---|---|---|
| *1: Amount of compound corresponding to n = 1 in the formula (1) contained in each composition with respect to the total amount of compounds corresponding to n = 1 to 5 contained in that composition *2: Amount of compounds corresponding to n = 2 to 5 in the formula (1) contained in each composition with respect to the total amount of compounds corresponding to n = 1 to 5 contained in that composition | | | | | | | | | | | | |

**Table 2**

| | | Ex. | | | | | | | Com. Ex. |
|---|---|---|---|---|---|---|---|---|---|
| | | 8 | 9 | 10 | 11 | 12 | 13 | 14 | 4 |
| Combination ratio (parts by mass) | Poly carbonate ^{*1} | 100 | 100 | 100 | 100 | 100 | 100 | 100 | 100 |
| | Anti-dripping agent^{*2} | 0.3 | 0.3 | 0.3 | 0.3 | 0.3 | 0.3 | 0.3 | 0.3 |
| | Flame retardant composition-1 | 3.5 | | | | | | | |
| | Flame retardant composition-2 | | 3.5 | | | | | | |
| | Flame retardant composition-3 | | | 3.5 | | | | | |
| | Flame retardant composition-4 | | | | 3.5 | | | | |
| | Flame retardant composition-5 | | | | | 3.5 | | | |
| | Flame retardant composition-6 | | | | | | 3.5 | | |
| | Flame retardant composition-7 | | | | | | | 3.5 | |
| | Comparative flame retardant composition-1 | | | | | | | | 3.5 |
| Evaluation | Evaluation of handling properties | Good | Good | Good | Good | Good | Good | Good | Poor |
| | Evaluation of processability | Good | Good | Good | Good | Good | Good | Good | Poor |
| | Flame retardancy test UL-94V | V-0 | V-0 | V-0 | V-0 | V-0 | V-0 | V-0 | V-0 |

| | | | | | | | | | |
|---|---|---|---|---|---|---|---|---|---|
| *1: Polycarbonate: trade name: Iupilon S-3000F manufactured by Mitsubishi Engineering-Plastics Corporation *2: Polytetrafluoroethylene | | | | | | | | | |

**Table 3**

| | | Ex. | | | | | | | Com. Ex. |
|---|---|---|---|---|---|---|---|---|---|
| | | 15 | 16 | 17 | 18 | 19 | 20 | 21 | 5 |
| Combination ratio (parts by mass) | Polyphenylene ether resin^{*1} | 80 | 80 | 80 | 80 | 80 | 80 | 80 | 80 |
| | Styrene-based resin^{*2} | 20 | 20 | 20 | 20 | 20 | 20 | 20 | 20 |
| | Flame retardant composition-1 | 20 | | | | | | | |
| | Flame retardant composition-2 | | 20 | | | | | | |
| | Flame retardant composition-3 | | | 20 | | | | | |
| | Flame retardant composition-4 | | | | 20 | | | | |
| | Flame retardant composition-5 | | | | | 20 | | | |
| | Flame retardant composition-6 | | | | | | 20 | | |
| | Flame retardant composition-7 | | | | | | | 20 | |
| | Comparative flame retardant composition-1 | | | | | | | | 20 |
| Evaluation | Evaluation of handling properties | Good | Good | Good | Good | Good | Good | Good | Poor |
| | Evaluation of processability | Good | Good | Good | Good | Good | Good | Good | Poor |
| | Flame retardance test UL-94V | V-0 | V-0 | V-0 | V-0 | V-0 | V-0 | V-0 | V-0 |

| | | | | | | | | | |
|---|---|---|---|---|---|---|---|---|---|
| *1: Polyphenylene ether resin: Poly(2,6-dimethyl 1,4-phenylene) ether *2: Styrene-based resin: high-impact polystyrene | | | | | | | | | |

It can be seen from the results shown in Table 1 that the flame retardant compositions of the present invention had excellent storage stability. Moreover, it can be seen from the results shown in Table 1 that the flame retardant compositions of the present invention had excellent fluidity and excellent handling properties. Moreover, it can be seen from the results shown in Tables 2 and 3 that the flame retardant compositions of the present invention had excellent handling properties and excellent processability, and further had sufficient flame retardation performance. In contrast, the comparative phosphoric acid esters 2 and 3, which contained a phosphoric acid ester represented by the formula (1) having n being 1 in an amount of 70 mass% or greater, had inferior storage stability. Moreover, the comparative phosphoric acid ester 1, which contained a phosphoric acid ester represented by the formula (1) having n being 1 in an amount of less than 60 mass%, had favorable storage stability, but poor fluidity, and consequently, the comparative flame-retardant resin composition containing this phosphoric acid ester had poor handling properties and poor processability.

### Industrial Applicability

According to the present invention, it is possible to provide a flame retardant composition that has excellent storage stability, excellent processability, and excellent handling properties.

Moreover, according to the present invention, it is possible to provide a flame-retardant resin composition that has excellent processability and excellent handling properties.

Furthermore, according to the present invention, it is possible to provide a molded body that has excellent flame retardancy.

## Claims

1. A flame retardant composition containing at least one phosphoric acid ester represented by the formula (1) below,
wherein the phosphoric acid ester contains phosphoric acid esters having n = 1, 2, 3, 4, and 5 in a total amount of 99 to 100 mass% inclusive, and
a phosphoric acid ester represented by the formula (1) below having n = 1 is contained in an amount of 60 mass% or greater and less than 70 mass% with respect to a total amount of the phosphoric acid ester: 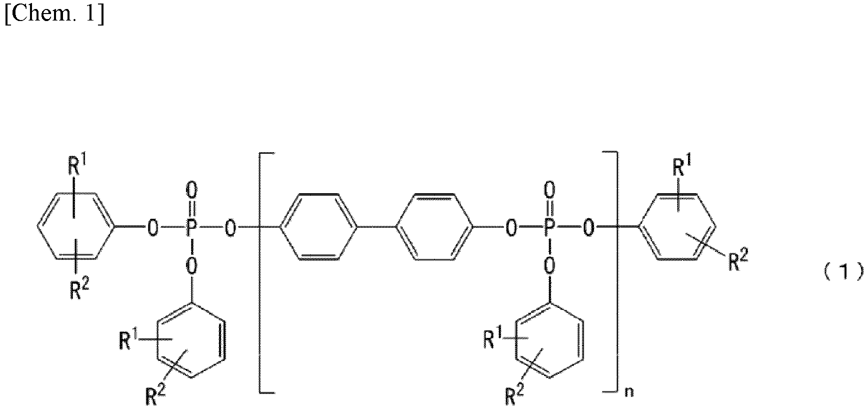 (wherein R¹ and R² each independently indicate a hydrogen atom or a methyl group, and
n indicates a number that is 1, 2, 3, 4, 5, 6, or 7).

2. The flame retardant composition according to claim 1, wherein R¹ and R ² in the formula (1) are hydrogen atoms.

3. The flame retardant composition according to claim 1 or 2, wherein the flame retardant composition is in liquid form at 25°C.

4. The flame retardant composition according to any one of claims 1 to 3, wherein the flame retardant composition has a viscosity of 17,500 to 40,000 mPa•s at 25°C.

5. A flame-retardant resin composition containing a synthetic resin and the flame retardant composition according to any one of claims 1 to 4.

6. The flame-retardant resin composition according to claim 5, wherein the synthetic resin is at least one selected from the group consisting of a polycarbonate resin and a copolymer thereof.

7. The flame-retardant resin composition according to claim 5, wherein the synthetic resin is at least one selected from the group consisting of a polyphenylene ether resin, a polystyrene resin, and a copolymer thereof.

8. A molded body which is obtained from the flame-retardant resin composition according to any one of claims 5 to 7.
